Europäisches Patentamt

European Patent Office

Office européen des brevets

(19)

(11) Numéro de publication : **0 487 438 A1**

# (12) DEMANDE DE BREVET EUROPEEN

(21) Numéro de dépôt : **91440094.0**

(22) Date de dépôt : **15.11.91**

(51) Int. Cl.[5] : **F17C 1/10,** F16L 58/08, F16L 58/10, B05D 1/06, B05D 5/06

(30) Priorité : **20.11.90 FR 9014712**

(43) Date de publication de la demande : **27.05.92 Bulletin 92/22**

(84) Etats contractants désignés :
**AT BE CH DE DK ES GB IT LI LU NL SE**

(71) Demandeur : **Benard, Aimé**
**19, Allée de la Chapelle**
**F-95120 Ermont (FR)**
(71) Demandeur : **Wendling, Jean**
**8, rue Jeanne d'Arc**
**F-67410 Drusenheim (FR)**

(72) Inventeur : **Benard, Aimé**
**19, Allée de la Chapelle**
**F-95120 Ermont (FR)**
Inventeur : **Wendling, Jean**
**8, rue Jeanne d'Arc**
**F-67410 Drusenheim (FR)**

(74) Mandataire : **Aubertin, François**
**Cabinet Lepage & Aubertin Innovations et**
**Prestations 4, rue de Haguenau**
**F-67000 Strasbourg (FR)**

(54) **Réservoir métallique notamment bouteille ou citerne à gaz.**

(57)    Un réservoir métallique, notamment, une bouteille ou une citerne à gaz, comporte sur sa face extérieure (3), un revêtement de protection anticorrosion (4) se présentant sous forme d'une poudre polymérisante constituée d'un mélange à base d'un composé macromoléculaire, formé à partir d'un epoxyde, et de particules de zinc.

Pour l'obtention d'une meilleure protection par effet cathodique et par effet barrière les particules de zinc, d'une part, sont constituées d'un mélange de poudre de zinc et de zinc lamellaire et, d'autre part, représentant de l'ordre de 30 à 60 % en poids dans la poudre polymérisante constituant le revêtement de protection anti-corrosion (4).

FIG. 1

L'invention concerne un réservoir métallique, notamment, une bouteille ou une citerne à gaz, comportant sur sa face extérieure, un revêtement de protection anti-corrosion, ainsi que des procédés d'application de ce revêtement.

La présente invention trouvera son application, plus particulièrement, dans le domaine de l'industrie spécialisée dans la conception de réservoirs dits métalliques, sensibles à la corrosion et qu'il convient de protéger au moyen d'un revêtement approprié. Cette invention concerne, également, les fabricants de ce type de protection anti-corrosion.

Plus particulièrement, dans le cadre des réservoirs, tels que bouteilles ou citernes à gaz, généralement exposés aux intempéries, divers revêtements de protection ont déjà été employés, jusqu'à ce jour, avec plus ou moins de satisfaction.

Ainsi, un de ces revêtements de protection consiste en la projection de zinc en fusion, d'une épaisseur d'environ quarante à soixante microns, sur ce type de réservoir, ceux-ci ayant subi, au préalable, un traitement de surface, tel qu'un grenaillage. Un tel traitement de surface conduit, simultanément, à un nettoyage et à une augmentation de la rugosité de la surface externe de ces réservoirs afin de favoriser l'adhérence du zinc en fusion. Ce type de revêtement de protection est, alors, complété, généralement, par l'application d'une peinture d'apprêt, par exemple de type glycérophtalique, vinylique, ou alkyde styrénée, ceci en fonction des caractéristiques de la laque de finition finalement appliquée.

Il est indéniable que ce type de revêtement de protection nécessite, par son application, un certain temps et une main-d'oeuvre qualifiée ce qui, bien entendu, se traduit par un coût de revient élevé.

Furent, alors, développées à titre de revêtement de protection, les peintures métalliques inoxydables contenant de l'ordre de 90 % en poids de zinc pulvérant relativement à l'extrait sec. Ces peintures métalliques ne nécessitent pour leur application et leur adhérence aux réservoirs, qu'une moindre rugosité de la face externe de ces derniers.

Les premières peintures métalliques liquides mises au point furent à base de solvants. Or l'application de ces peintures aux solvants ne peut se faire que moyennant un certain nombre d'installations spécifiques, telles qu'une cabine de peinture parfaitement ventilée et un équipement de protection spécial pour l'opérateur assurant la mise en peinture afin d'éviter l'inhalation, de manière excessive, des vapeurs du solvant.

A noter qu'en dehors de ces inconvénients, ces peintures aux solvants sont de plus en plus souvent proscrites en vue de protéger l'environnement car elles constituent, sans aucun doute, un agent polluant non négligeable.

De manière à remédier à ce problème que constitue la présence de solvants, on a élaboré des peintures dites hydrodiluables bien moins nocives mais qui ne présentent pas moins l'inconvénient de ne procurer qu'une faible résistance à la corrosion.

On connaît, en outre, par le document DE-A-2.636.878, un procédé pour l'application par effet électrostatique sur un substrat métallique d'une poudre ayant des propriétés de conductibilité électrique importante pour faciliter l'application électrostatique d'une seconde couche de peinture. En fait, la poudre susceptible d'être employée peut intégrer pour 90 % de son poids de la poudre de zinc. Un tel revêtement bien que présentant, effectivement une conductibilité électrique importante n'en conduit pas moins à une certaine protection anti-corrosion. Cependant, celle-ci n'étant obtenue que par effet cathodique, sa qualité est médiocre à moins de procéder à l'application d'une couche d'épaisseur importante conduisant, naturellement, à un coût de revient élevé.

La présente invention a pour but de remédier à l'ensemble de ces inconvénients rencontrés au niveau des revêtements de protection anticorrosion connus par le passé, en proposant un type de revêtement de protection anti-corrosion nouveau pour ces bouteilles ou citernes à gaz, qui permet, non seulement, une économie considérable en matière première, mais qui est, par ailleurs, tout à fait compatible avec les conditions draconiennes imposées pour la protection de l'environnement. Le revêtement de protection anti-corrosion, conforme à l'invention s'avère, en outre, d'une efficacité supérieure aux revêtements de protection connus tout en offrant une résistance aux chocs meilleure tout au moins égale à ces derniers.

L'invention telle qu'elle est caractérisée dans les revendications résout le problème et consiste en un réservoir métallique notamment une bouteille ou une citerne à gaz comportant sur sa face extérieure un revêtement de protection anti-corrosion se présentant sous forme d'une poudre polymérisante constituée d'un mélange à base d'un composé macromoléculaire formé à partir d'un epoxyde, et de particules de zinc, celles-ci, d'une part, étant constituées d'un mélange de poudre de zinc et de zinc lamellaire et, d'autre part, représentant de l'ordre de 30 à 60 % en poids dans la poudre polymérisante constituant le revêtement de protection anti-corrosion.

Ainsi, la poudre de zinc, s'identifiant par des particules approximativement sphériques, est en mesure de s'imbriquer entre les particules de zinc lamellaire ce qui a pour conséquence le renforcement de la protection anti-corrosion par effet barrière.

La présente invention est également relative à un procédé pour l'application d'un tel revêtement de protection anti-corrosion ainsi que de la couche de finition, ce procédé consistant en ce que :

    – on applique par effet électrostatique, le revêtement de protection anti-corrosion, à base d'époxyde et d'un mélange de particules de zinc, sur la face extérieure du réservoir métallique ;

– on chauffe ledit réservoir afin d'obtenir la polymérisation dudit revêtement de protection anti-corrosion ;

– on applique par effet électrostatique une couche de finition se présentant sous forme de poudre ;

– on chauffe ledit réservoir pour obtenir la polymérisation de la couche de finition.

Selon un autre procédé conforme à l'invention :

– on préchauffe, au préalable, le réservoir métallique ;

– on procède au dépôt sous forme électrostatique du revêtement de protection anti-corrosion à base d'époxyde et d'un mélange de particules de zinc ;

– on applique par effet électrostatique une poudre correspondant à la couche de finition ;

– on chauffe à nouveau ledit réservoir afin d'assurer la polymérisation totale de la couche de finition.

Ou encore, selon un autre procédé :

– on préchauffe, au préalable, le réservoir métallique ;

– on procède au dépôt sous forme électrostatique du revêtement de protection anti-corrosion à base d'époxyde et d'un mélange de particules de zinc ;

– on préchauffe, à nouveau, le réservoir métallique en vue de l'application de la couche de finition ;

– on applique, par effet électrostatique, une couche de finition se présentant sous forme d'une poudre.

Selon un dernier procédé, conforme à l'invention, on chauffe une seule fois le réservoir métallique avant d'appliquer successivement et par effet électrostatique, le revêtement de protection anti-corrosion et la couche de finition.

Les avantages obtenus grâce à cette invention consistent, essentiellement, en ce que l'épaisseur de la première couche que constitue le revêtement de protection anti-corrosion à base d'un mélange de particules de zinc et d'époxyde, peut être ramené à, environ, 20 micromètres tout en conservant les qualités anti-corrosion obtenues avec des épaisseurs supérieures.

En effet, en dehors de la protection par effet cathodique procurée par la présence de particules de zinc, celles-ci confèrent en outre, une parfaite protection par effet barrière.

De plus, ce revêtement, une fois polymérisé résiste parfaitement aux chocs que peuvent être amenés à subir ces réservoirs, notamment en cours de stockage.

En fin de compte, l'application, sous forme électrostatique, de la poudre, constituant la couche de finition, conduisant à une économie de matière équivalente à l'application du revêtement de protection anti-corrosion et, ce, par rapport aux peintures liquides traditionnelles, il en résulte, bien évidemment, un coût de revient amoindri de ces réservoirs que constituent les bouteilles ou citernes à gaz.

Quant aux procédés d'application de ce revêtement de protection anti-corrosion et d'au moins une couche de finition, ils sont de mise en oeuvre particulièrement aisée ce qui ne fait que renforcer l'effet précédemment obtenu.

L'invention est exposée plus en détail dans la description qui va suivre et se rapportant au dessin joint en annexe, représentant seulement un mode d'exécution.

– la figure 1 est une représentation schématisée partielle et en coupe d'un réservoir conforme à l'invention et donc recevant, sur sa face extérieure, d'une part, un revêtement de protection anti-corrosion se composant d'une poudre polymérisante à base d'époxyde et d'un mélange de particules de zinc et, d'autre part, au moins une couche de finition également obtenue par dépôt sous forme électrostatique d'une poudre polymérisante ;

– la figure 2 représente les différentes étapes d'un premier procédé d'application du revêtement de protection anti-corrosion et d'une couche de finition sur des réservoirs conformes à l'invention ;

– les figures 3, 4 et 5 sont des représentations analogues à la figure 2 et illustrant d'autres procédés conformes à l'invention.

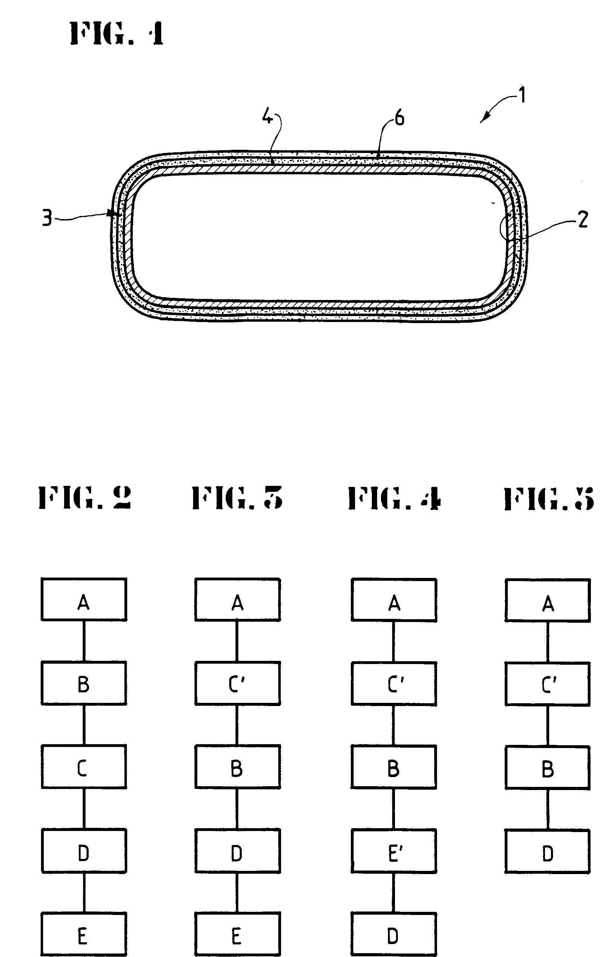

Ainsi et tel que visible dans la figure 1, la présente invention est relative à un réservoir 1, plus particulièrement de type métallique, tel qu'une bouteille ou une citerne à gaz dont l'enveloppe 2 reçoit, sur sa face extérieure 3, au moins un revêtement de protection 4 destiné à empêcher, essentiellement, la corrosion de ce type de réservoir.

En fait et selon l'invention, ce revêtement de protection anti-corrosion 4 consiste, plus particulièrement, en l'application sur cette face extérieure 3 de l'enveloppe 2 d'une poudre polymérisante, ceci au moyen d'un pistolet ou analogue et par effet électrostatique. En fait, ladite poudre polymérisante présente la particularité d'être constituée d'un mélange d'un composé macromoléculaire formé à partir d'un époxyde et d'un mélange de particules de zinc.

En fait, ce type de poudre polymérisante présente l'avantage de procurer, après polymérisation, un revêtement de protection anti-corrosion 4 de très grande qualité, ceci pour un dépôt d'épaisseur particulièrement réduite.

Par ailleurs, un tel revêtement de protection anti-corrosion s'avère d'une résistance aux chocs supérieure aux revêtements de protection connus jusqu'à présent telles que la métallisation et les peintures liquides métalliques.

Avantageusement, la part, en poids, du mélange de particules de zinc représente dans la composition de ladite poudre polymérisante de l'ordre de 30 à 60 % et, préférentiellement, environ 50 %.

En fait et selon l'invention, le mélange de particules de zinc est composé de poudre de zinc qui se caractérise par des particules approximativement sphériques et de zinc lamellaire.

Préférentiellement, la part de la poudre de zinc rentrant dans cette composition du mélange de particules de zinc est de l'ordre de 30 à 70 % et, par conséquent, le zinc lamellaire représentant une proportion de l'ordre de 70 à 30 % dans ce mélange.

En fait, ce mélange particulier de particules de zinc permet non seulement, d'obtenir une parfaite protection anti-corrosion par effet cathodique mais, surtout, présente l'avantage de procurer une protection par effet barrière de qualité irréprochable. Plus particulièrement, cette protection par effet barrière est renforcée du fait de l'imbrication des particules de poudre de zinc entre les particules de zinc lamellaire.

Bien entendu, sur une telle première couche destinée à une protection contre la corrosion peuvent être appliquées une ou plusieurs couches de finition. Là encore, ce ou cette couche de finition peut être obtenue par dépôt par effet électrostatique d'une poudre polymérisante, par exemple, d'époxyde ou de polyuréthane ou encore de polyester, cette énumération étant nullement limitative.

La présente invention est également relative à des procédés pour l'application d'un tel revêtement de protection anti-corrosion ainsi que d'une ou plusieurs couches de finition 6 sur des réservoirs métalliques conformes à l'invention. Ces procédés sont schématisés dans les figures 2 à 5, visualisant, plus particulièrement, les différentes étapes qu'il convient de mettre en oeuvre.

Ainsi selon le procédé représenté dans la figure 2, il est préconisé, dans un premier temps, de nettoyer, parfaitement, le réservoir métallique, ceci pouvant être obtenu par une opération de grenaillage A, telle que connue par l'Homme du Métier. Il s'en suit l'application, par effet électrostatique, de la poudre polymérisante que compose le revêtement de protection anti-corrosion 4, cette opération correspondant à l'étape B.

On procède, ensuite, au chauffage du réservoir 1 afin d'obtenir la polymérisation, étape repérée C.

Vient alors l'étape D qui correspond à l'application d'une couche de finition 6, puis l'étape E qui est, à nouveau, un chauffage du réservoir 1 afin d'obtenir la polymérisation de la poudre composant la couche de finition. Il est bien entendu que les étapes D et E peuvent être répétées autant de fois que nécessaire afin d'obtenir la finition recherchée.

Le procédé illustré dans la figure 3 se distingue du procédé précédent en ce que, après grenaillage du réservoir 1 correspondant à l'étape A, on préchauffe ce réservoir de manière à l'élever en température de l'ordre de 150 à 250° Celsius. Il s'agit, là, de l'étape C'.

L'avantage découlant d'un tel préchauffage consiste en ce que, au cours du dépôt de la poudre polymérisante, correspondant au revêtement de protection anti-corrosion 4, étape repérée B, se produit la polymérisation de ladite poudre. En quelque sorte, cette polymérisation s'effectue depuis l'intérieur vers l'extérieur de cette couche procurant, ainsi, une étanchéité supérieure pour une épaisseur de couche plus réduite.

Immédiatement après l'application de cette première couche protégeant le réservoir contre la corrosion, il est préconisé d'appliquer la seconde couche, dite de finition, étape repérée D puis de chauffer le réservoir 1 au cours de l'étape E.

En fait, le procédé illustré dans la figure 5, se distingue de celui qui vient d'être décrit en ce que la dernière étape de chauffage E a été supprimée. Plus précisément, dans le cadre de ce procédé on ne chauffe qu'une seule fois le réservoir métallique 1 de sorte qu'il vienne à accumuler une quantité de chaleur suffisante pour assurer la polymérisation de la couche, correspondant au revêtement de protection anti-corrosion 4, et de la couche de finition 6, qui sont, alors, appliquées successivement. Un tel procédé est, notamment, possible dans le cas où l'enveloppe 2 dudit réservoir 1 est d'épaisseur suffisante en vue d'assurer cette accumulation des calories nécessaires.

Dans la figure 4, il est représenté un procédé selon lequel après grenaillage, on préchauffe C' le réservoir 1 à une température de l'ordre de 150 à 250° Celsius. Puis l'on applique B la couche correspondante au revêtement de protection anti-corrosion 4 avant de chauffer, à nouveau, ce réservoir 1 à une température de 150 à 250° Celsius, étape repérée E'. La dernière opération D est, dans ce cas, l'application de la poudre représentant la couche de finition 6. Là encore, les étapes E' et D peuvent être répétées, si nécessaire.

En conclusion, un réservoir, conforme à l'invention et, par conséquent, comportant un revêtement de protection anti-corrosion obtenu à base d'une poudre polymérisante intégrant, notamment, un mélange de particules de zinc, est d'un coût de revient moindre en comparaison à d'autres réservoirs protégés au moyen des revêtements connus jusqu'à présent, tout en présentant des caractéristiques largement supérieures à ces derniers. De tels réservoirs, conformes à l'invention, représentent, de ce fait, un réel progrès technique dans le domaine.

## Revendications

1. Réservoir métallique notamment une bouteille ou une citerne à gaz comportant sur sa face extérieure (3) un revêtement de protection anticorrosion (4), se présentant sous forme d'une poudre polymérisante constituée d'un mélange à base d'un composé macromoléculaire, formé à partir d'un époxyde, et de particules de zinc, caractérisé par le fait que les particules de zinc, d'une part, sont constituées d'un mélange de poudre de zinc et de zinc lamellaire et, d'autre part, représentent de l'ordre de 30 à 60 % en poids dans la poudre polymérisante constituant le revêtement de protection anticorrosion (4).

2.  Réservoir métallique selon la revendication 1, caractérisé par le fait que le mélange de particules de zinc représente de l'ordre de 50 % en poids dans la poudre polymérisante constituant le revêtement de protection anticorrosion (4).

3.  Réservoir métallique selon la revendication 1, caractérisé par le fait que la poudre de zinc rentre, dans la composition du mélange de particules de zinc pour une part de l'ordre de 30 à 70 %, le zinc lamellaire constituant le complément.

4.  Réservoir métallique selon la revendication 1, caractérisé par le fait que le zinc lamellaire représente une proportion de l'ordre de 70 à 30 % dans le mélange de particules de zinc.

5.  Réservoir métallique selon la revendication 1, caractérisé par le fait que sur le revêtement de protection anticorrosion (4) est appliquée au moins une couche de finition constituée par une poudre polymérisante.

6.  Procédé pour l'application d'un revêtement de protection anticorrosion (4) ainsi que d'au moins une couche de finition (6) sur un réservoir métallique (1) selon les revendications 1 à 5 caractérisé par le fait que :
    – A : on procède au grenaillage dudit réservoir (1) ;
    – B : on applique par effet électrostatique, la poudre polymérisante que compose le revêtement de protection anticorrosion (4) ;
    – C : on chauffe le réservoir (1) ;
    – D : on applique par effet électrostatique, la poudre polymérisante constituant une couche de finition (6) ;
    – E : on chauffe le réservoir (1).

7.  Procédé pour l'application d'un revêtement de protection anticorrosion (4) ainsi que d'au moins une couche de finition (6) sur un réservoir métallique (1) selon les revendications 1 à 5 caractérisé par le fait que :
    – A : on procède au grenaillage dudit réservoir (1) ;
    – C' : on préchauffe ce réservoir (1) à une température de 150 à 250° Celsius ;
    – B : on applique, par effet électrostatique la poudre polymérisante que compose le revêtement de protection anticorrosion (4) ;
    – D : on applique par effet électrostatique, la poudre polymérisante constituant une couche de finition (6) ;
    – E : on chauffe le réservoir (1).

8.  Procédé pour l'application d'un revêtement de protection anticorrosion (4) ainsi que d'au moins une couche de finition (6) sur un réservoir métallique (1) selon les revendications 1 à 5 caractérisé par le fait que :
    – A : on procède au grenaillage dudit réservoir (1) ;
    – C' : on préchauffe ce réservoir (1) à une température de 150 à 250° Celsius ;
    – B : on applique, par effet électrostatique la poudre polymérisante que compose le revêtement de protection anticorrosion (4) ;
    – E' : on chauffe à nouveau, le réservoir (1) à une température de l'ordre de 150 à 250° Celsius ;
    – D : on applique par effet électrostatique, la poudre polymérisante constituant une couche de finition (6) ;

9.  Procédé pour l'application d'un revêtement de protection anticorrosion (4) ainsi que d'au moins une couche de finition (6) sur un réservoir métallique (1) selon les revendications 1 à 5 caractérisé par le fait que :
    – A : on procède au grenaillage dudit réservoir (1) ;
    – C' : on préchauffe ce réservoir (1) à une température de 150 à 250° Celsius ;
    – B : on applique, par effet électrostatique la poudre polymérisante que compose le revêtement de protection anticorrosion (4) ;
    – D : on applique par effet électrostatique, la poudre polymérisante constituant une couche de finition (6).

10. Procédé selon les revendications 6 à 8 caractérisé par le fait que l'on répète les étapes D et E ou E' et D autant de fois qu'il convient d'appliquer de couches de finition (6) sur le réservoir (1).

# FIG. 1

# FIG. 2   FIG. 3   FIG. 4   FIG. 5

Office européen
des brevets

**RAPPORT DE RECHERCHE EUROPEENNE**

Numero de la demande

EP 91 44 0094
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | DE-A-2 636 878 (UNILEVER)<br>* page 1, alinéa 1 *<br>* page 2, alinéa 6 - page 3, alinéa 4 *<br>* page 4, alinéa 3 *<br>* page 5, alinéa 3 -alinéa 4 *<br>* page 6, alinéa 2 -alinéa 5 *<br>* exemple 4 *<br>* revendications 1-3,6-7 *<br>--- | 1,5,6 | F17C1/10<br>F16L58/08<br>F16L58/10<br>B05D1/06<br>B05D5/06 |
| A | FR-A-2 575 540 (SCHNEIDER INDUSTRIE & CORSOLAC INDUSTRIE)<br>* abrégé *<br>* page 1, ligne 1 - ligne 10 *<br>* page 2, ligne 15 - ligne 24 *<br>* page 2, ligne 30 - page 3, ligne 28 *<br>* revendications 1-5; figure 1 *<br>--- | 1,5,6 | |
| A | FR-A-2 452 327 (HELIC VAN CAUWENBERGHE)<br>* page 1, ligne 1 - ligne 3 *<br>* page 2, ligne 16 - ligne 23 *<br>* page 2, ligne 38 - page 3, ligne 3 *<br>* page 4, ligne 17 - ligne 32 *<br>* page 5, ligne 26 - ligne 29 *<br>* revendications 1,3,8,13,14 *<br>--- | 1,5,6 | |
| A | DE-C-2 612 154 (K.H.VAHLBRAUK)<br>* colonne 1, ligne 60 - ligne 65 *<br>* colonne 2, ligne 41 - ligne 66 *<br>* colonne 3, ligne 12 - colonne 4, ligne 24 *<br>* revendications 1-5,9 *<br>---<br><br>-/-- | 1,5,6 | |

**DOMAINES TECHNIQUES RECHERCHES (Int. Cl.5 )**

F17C
F16L
B05D

Le présent rapport a été établi pour toutes les revendications

| Lieu de la recherche | Date d'achèvement de la recherche | Examinateur |
|---|---|---|
| LA HAYE | 24 FEVRIER 1992 | STEVNSBORG N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)

Office européen
des brevets

**RAPPORT DE RECHERCHE EUROPEENNE**

Numero de la demande

EP 91 44 0094
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4 025 665 (M.J.HANNON)<br>* abrégé *<br>* colonne 1, ligne 8 - ligne 13 *<br>* colonne 2, ligne 35 - ligne 49 *<br>* colonne 3, ligne 1 - ligne 15 *<br>* colonne 4, ligne 38 - colonne 5, ligne 7 *<br>* colonne 5, ligne 41 - ligne 46 *<br>* colonne 5, ligne 61 - colonne 6, ligne 39 *<br>* colonne 7, ligne 44 - ligne 61 *<br>* revendications 1,2,5 *<br>--- | 1,6 | |
| A | FR-A-2 340 140 (CANADA WIRE AND CABLE LTD.)<br>* page 1, ligne 1 - ligne 8 *<br>* page 1, ligne 33 - page 2, ligne 7 *<br>* page 2, ligne 39 - page 3, ligne 8 *<br>* page 3, ligne 20 *<br>* revendications 1,2,11-13,15,18 *<br>--- | 5-9 | |
| A | US-A-4 027 366 (J.M.MILLAR ET AL.)<br>* abrégé *<br>* colonne 2, ligne 39 - ligne 47 *<br>* colonne 4, ligne 9 - ligne 36 *<br>* colonne 5, ligne 36 - ligne 44 *<br>* colonne 5, ligne 65 - colonne 6, ligne 24 *<br>* colonne 6, ligne 38 - ligne 64 *<br>* revendications 1,6,8-10 *<br><br>----- | 1,5-7,10 | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 24 FEVRIER 1992 | STEVNSBORG N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P0402)